# EUROPEAN PATENT SPECIFICATION

(11) **EP 0 786 034 B1**
(45) Date of publication and mention of the grant of the patent: **16.09.1998**
(21) Application number: 95933557.1
(22) Date of filing: 16.10.1995
(51) Int. Cl.: E01C 3/06, E02D 31/00, E03F 1/00

(54) **PAVING SYSTEM FOR SPILLAGE AND FLOOD MANAGEMENT**
PFLASTERSYSTEM FÜR AUSSCHÜTTUNG UND STAUVERWALTUNG
SYSTEME DE DALLAGE SERVANT A CONTROLER LES ECOULEMENTS ET LES INONDATIONS

(30) Priority: 14.10.1994 GB 9420812
(43) Date of publication of application: 30.07.1997
(73) Proprietor: COVENTRY UNIVERSITY, Coventry CV1 5FB (GB)
(72) Inventor: PRATT, Christopher, John, Coventry University, Coventry CV1 5FB (GB)
(74) Representative: Hallam, Arnold Vincent
(86) International application number: GB9502434
(87) International publication number: WO9612067

(56) References cited:
- EP-A- 0 199 598
- WO-A-85/00631
- WO-A-91/16496
- WO-A-92/20864
- DE-A- 2 849 821
- DE-A- 3 041 624
- DE-A- 4 017 115
- DE-U- 9 316 175
- FR-A- 2 642 774

## Description

This invention relates to a system of construction for paved surfaces.

Paved surfaces are required in many situations where the impermeability of conventional pavement is essential, but not without disadvantages. In some situations - refuelling stations, chemical loading bays and vehicle parks, for instance - there may be risk of spillage of fluids which must be prevented from entering the drainage system and so passing by uncontrolled discharge into the environment, and must be prevented from entering the environment at all without preliminary treatment.

Where there are large areas of pavement - motorways, for instance - flash storms may cause such flooding that existing storm-water provisions become overloaded. There have been occasions, too, when emergency treatment of spillage after accidents involving chemical tankers has resulted in serious damage to the environment over wide areas.

Where risks of chemical contamination are low, various forms ofporous pavement have been employed, allowing spillage to soak away into the ground beneath. There is, however, a limited rate at which ground can absorb moisture, and there remains a risk of flooding when rainfall is very high.

WO-A-8 500 631 describes a structure for controlling an artificial water table beneath a tennis court or agricultural land in which a ballast layer of generally uniform size rock is laid on top of a watertight membrane in a basing, the ballast layer being extremely permeable by water. The ballast layer is covered by a permeable membrane which is covered by a layer of finely divided particles which are prevented from penetrating the ballast layer by the permeable membrane. Water diffuses through the fine layer by capillary action. Water is inserted in the ballast layer, causing the water table in it to rise to and above the permeable membrane. The amount of water provided to a finished layer above the fine layer can be adjusted by raising and lowering the water level.

DE-A-3 041 624 describes a method of sealing and draining an area of ground where the regions to be sealed are limited by kerb stones, some of which have discharge channels.

DE-U-9 316 175 describes a paving system for spillage where the substrate layer ("Trapschicht 11 mit einer körmung 0/32") comprises a certain amount of (very) fine particles.

According to the present invention, there is provided a paving system according to the features of claim 1, wherein the size of the particles of the substrate layer are of a size 15mm to 300mm.

In a preferred form of the invention a filtering layer is provided intermediate the paving and substrate layers for filtering solids from liquid permeating through the paving layer, and a dispersing layer is located intermediate the paving and filtering layers for dispersing liquid permeating from the paving layer over the filtering layer.

The permeable layer may be perforated to allow the liquid to run through into a tank or channel formed by the containment membrane layer.

The permeable layer, which forms the pavement may be a single sheet laid or cast over the whole of, or a large section of, an area, in which the perforations may conveniently be simple holes. However, it is advantageous to have holes of small span to stop ingress of foreign objects, but of long periphery to facilitate dispersion of the fluid underneath the pavement. Slot-like holes are therefore attractive, and these can conveniently be provided by grooves on the outside of prefabricated pavings.

In a further preferred arrangement, the pavement may be formed by pavings of such size and mass as to be convenient to handle continually without fatigue, and designed to be laid close-fitting without mortar or cement. They may be made in any material suitable for any particular application, such as brick, concrete, or cast iron, and must be of sufficient depth to ensure dispersion of the concentrated loads applied. Concurrently, they are of sufficient depth to prevent them tipping over under load, given the lateral freedom allowed by close-fitting laying. Pavings may have holes through them, but from many points of view it is preferable that the perforations be grooves in the interfaces separating adjacent pavings. Paviours find this type of pavement cheap and easy to lay, with the further advantage that pavings can easily be lifted when required.

The incorporation of raised pads on the upper surfaces of at least some of the pavings prevents compression of the gravel filling around the paving and reduces the danger of hydroplaning in storm conditions, and is a preferred feature.

Underneath the pavings, the filtering layer is a geotextile layer used to filter out unwanted solids. This is preferably between 1mm and 1.5mm thick.

The pavings are laid on a bed of gravel or crushed gravel or other small grained particulate material (the dispersing layer) which covers the geotextile layer, and the same or similar material is dropped into the perforations and around the raised pads. The layer is a material which is not readily friable, dissolved or susceptible to frost and is substantially inert to water. The particle size is preferably of a minimum 5mm diameter to a maximum of 10mm diameter. The particle size may vary within the above range in the layer.

This particulate layer provides a flat surface for the pavings and ensures that the geotextile layer is uniformly loaded. Moreover, it helps to disperse the fluid from the perforations uniformly over the surface of the geotextile layer, and provides an initial screening of the fluid to minimise clogging of the geotextile layer beneath. The particulate infill provides a relatively smooth surface for humans and animals to walk on, and is easily weeded when necessary.

Beneath the geotextile layer is the substrate proper (the substrate layer) which lies on, and is contained by, the impermeable membrane described above. This is a deep layer of mainly hard nodules. These could be hollow, and there may be advantage in some being hollowed out or drilled as described below, but they are most efficient when solid. They are preferably of irregular or lobate form so that they remain firmly in place under load but are surrounded by interstitial cavities in which the drained fluid can dwell.

These nodules may be of any suitable material: crushed stone, pebbles and blast furnace slag are typical examples, but special materials or shapes may be needed in particular applications. The size and type of nodule affects the storage and release capabilities of the paving system. The material used for the substrate is also a material which is not readily friable, dissolved or susceptible to frost. It is also substantially inert to water. The material can consist of particles of differing sizes in the range 15mm to 200 to 300mm and the particle size may vary within the substrate layer. However, the majority of particles in the material are preferably of a size nearer the lower end of this range.

This system ideally meets the requirements for biological decomposition of certain types of harmful spillage. Bacteria breed on the substrate walls if spillages are not infrequent, and fresh cultures or cultures of different bacteria can be introduced into the substrate cavities when needed. It may be advantageous to provide 'nests', perhaps in porous or hollow nodules, in which suitable bacteria can breed awaiting the next spillage. It may be necessary in some cases to provide nutrient occasionally to ensure that the bacteria do remain available. Cultures and nutrient can be introduced from above the pavement when necessary without disturbing the pavement.

Chemicals also may be introduced in this way for spillages that are not amenable to biological treatment.

It is an important advantage of this construction that all its elements can easily be lifted out for examination, flushing or other cleaning, or substitution if needed, and the geotextile member can be replaced when it is clogged.

Weirs or dividers can be introduced into the substrate to isolate sections of the tank or channel, either for floodwater control in sloping channels or to allow chemical or biochemical treatment of spillage. Such weirs might be built within the impermeable membrane, but there may be advantage in some cases in embedding a smoothly grooved U-shaped component into the ground before the impermeable membrane is laid, and then sliding a pre-fabricated mating weir into position within the membrane lying over the U-shaped component, or sealingly attached to it, to trap the membrane without damaging it. Depending on the application, weirs may be porous, as for floodwater control, or impervious, as for chemical or biochemical treatment of spillages.

Where the cavity within the impermeable membrane is compartmentalised by end closures or impermeable weirs there will be need for valves and discharge ducts for drainage. The provision of the valves and ducts that are sealingly connected to an impermeable membrane is well understood by those skilled in the art and need not be considered here.

This ability to process spillages in situ is regarded as a highly desirable feature of the newly invented system described here. Appropriate chemicals can be admitted into specific containment sections so that hazardous fluids are rendered harmless before they are diluted in more general effluent systems. Added chemicals may themselves be hazardous or harmful in some instances, so by treating the spillage in exact proportions in isolation the overall damage can be minimised. It is much more difficult to do this when the spillage has already been intermixed with fluids from other sources.

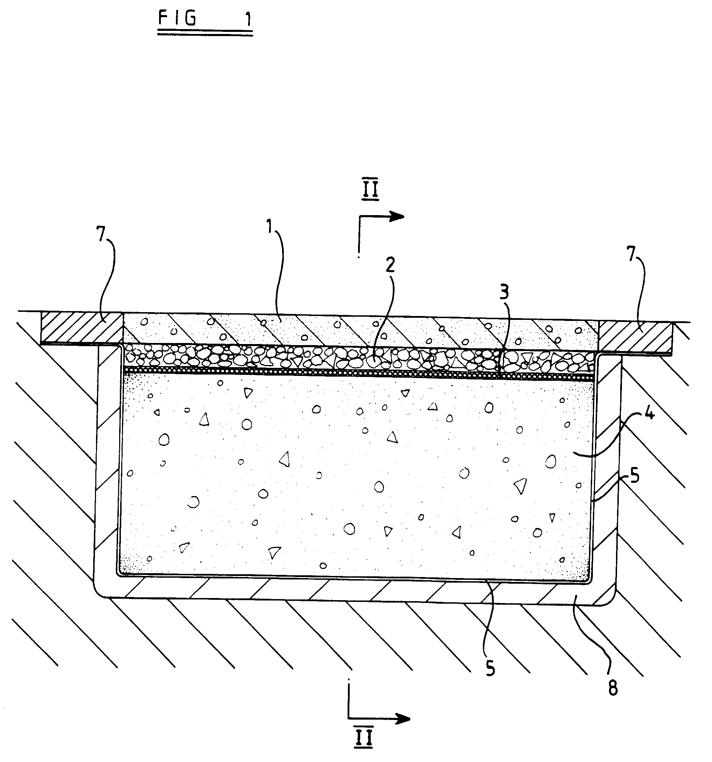

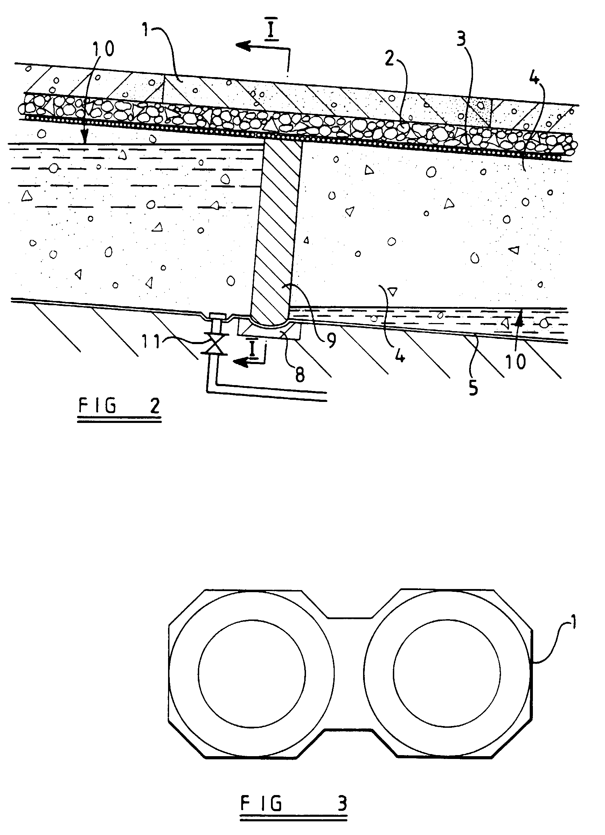

The present invention is further described hereinafter, by way of example, with reference to the accompanying drawings, in which:-
Figure 1 shows a transverse cross-section on the line 2-2 of Figure 2 through one embodiment of a paving system according to the present invention;
Figure 2 shows a longitudinal cross-section on the line 1-1 of the system of Figure 1; and
Figure 3 illustrates a typical discrete paving suitable for use in this paving system.

Referring to the drawings, discrete pavings 1 are laid on a bed of gravel as shown at 2, and underneath this bed of gravel is a geotextile layer shown at 3.

A substrate of crushed stone is shown at 4.

The impermeable plastics membrane is shown underneath the substrate at 5 and up the sides of the duct. The top of the impermeable membrane is trapped in this case under border stones as shown at 7.

A suggested U-frame used to retain a divider in the form of a weir 9, is shown at 8.

The weir fits inside the U-frame 8. Here, the impermeable membrane 5 is shown trapped between the weir 9 and the U-frame 8. The weir relies upon the support given by the substrate 4. The weir 9 may extend at least a portion of the height of the substrate 4.

A difference in fluid levels on the two sides of the weir 9 is indicated by the two arrows at 10, and a drain valve and outlet pipe is indicated at 11. Since the weir is always at the lowest point of any containment, the valve mounting could be included in the U-frame 8, but it is shown discrete here for clarity.

## Claims

1. A paving system for spillage or floodwater management comprising:
a permeable layer (1) providing an upper surface;
at least one supporting substrate layer (4) thereunder which is permeable to liquid;
and a containment membrane (5) of impermeable material containing said substrate layer (4) for controlled retention of liquid therein;
wherein:
said permeable layer (1) provides for the drainage of spillage or floodwater therethrough into the substrate layer (4) and for the introduction of treatment material into said substrate layer (4);
the substrate layer (4) is of particulate material;
the particles of the substrate layer (4) are of irregular shape thereby to provide interstitial cavities therebetween in which draining spillage or floodwater or introduced treatment material can dwell, and are of a size 15mm to 300mm;
and wherein the substrate layer (4) is of a material which is non-friable and non-susceptible to frost.

2. A paving system as claimed in claim 1 wherein the substrate layer (4) is partially or fully divided by one or more impermeable divider or weir means (9) into sections within the containment membrane (5) containing the substrate layer (4) for spillage or floodwater control or to allow for effective treatment of spillage in said substrate layer (4).

3. A paving system as claimed in any of the preceding claims wherein the divider or weir means (9) or each thereof extends from the bast of the containment membrane (5) for at least a portion of the height of said substrate layer (4) for preventing or restricting passage of drained spillage or floodwater or introduced treatment material from one section of the substrate layer (4) to an adjacent section or sections.

4. A paving system as claimed in claim 3 wherein the divider or weir means (9) or each thereof extends for the height of said substrate layer (4).

5. A paving system as claimed in any of claims 2 to 4 wherein the divider or weir means (9) or each thereof is supported by a respective support member (8), said containment membrane (5) being retained between the divider or weir means (9) and the support member (8).

6. A paving system as claimed in claim 5 wherein the support member (8) is substantially U-shaped having an inner groove extending the length thereof so as to slidably receive said divider or weir means (9).

7. A paving system as claimed in any of preceding claims 2 to 6 wherein the containment membrane (5) is formed as an elongate channel having a base portion and side portions wherein each side portion extends up to the permeable layer (1) and the divider or weir means (9) on each thereof extends for the full width of the channel .

8. A paving system as claimed in any of the preceding claims wherein the containment membrane (5) is of impermeable plastics material.

9. A paving system as claimed in any of the preceding claims wherein said permeable layer (1) is perforated for the drainage of spillage or floodwater therethrough into the substrate layer (4) and for the introduction of treatment material into the substrate layer (4).

10. A paving system as claimed in any of the preceding claims wherein said permeable layer (1) has openings for the drainage of spillage or floodwater therethrough into the substrate layer (4) and for the introduction of treatment material into the substrate layer.

11. A paving system as claimed in claim 10 wherein the openings through the permeable layer (1) are of slot-like form.

12. A paving system as claimed in any of the preceding claims wherein the permeable layer (1) is formed by a plurality of discrete pavings having lateral abutting edge surfaces.

13. A paving system as claimed in claim 12 wherein each discrete paving (1) is provided with at least one groove in at least one of said abutting edge surfaces, each said groove extending for the thickness of said paving thereby to form said slot-like holes.

14. A paving system as claimed in claim 12 or 13 wherein at least some of the discrete pavings are provided with raised pads on an upper surface thereof.

15. A paving system as claimed in any of claims 1 to 11 wherein said permeable layer is formed by a single sheet laid or cast over the whole of or at least a large section of an area.

16. A paving system as claimed in any of the preceding claims wherein a filtering layer (3) is provided intermediate the permeable and substrate layers (1, 4) for filtering solids from spillage or floodwater draining through the permeable layer (1).

17. A paving system as claimed in claim 16, wherein a dispersing permeable layer (2) is provided between the permeable and filtering layers (1, 3) for dispersing spillage or floodwaters draining through the permeable layer (1) over the filtering layer (3).

18. A paving system as claimed in any of the preceding claims wherein the particle size of the substrate layer (4) is in the range of 15mm to 300mm with the particles being predominantly of a size nearer to the lower end of the range.

19. A paving system as claimed in claim 18 wherein the particle size ofthe substrate layer (4) is in the range of 15mm to 200mm with the particles being predominantly of a size nearer to the lower end of the range.

20. A paving system as claimed in any of the preceding claims wherein said particles are of lobate form.

21. A paving system as claimed in any of claims 18 to 20 wherein said particles are porous or hollow.

22. A paving system as claimed in claim 16 or any of claims 17 to 21 when appendant to claim 4 wherein the filtering layer (3) is of geotextile material.

23. A paving system as claimed in claim 16 or 22 wherein the thickness of the filtering layer (3) is in the range of 1mm to 1.5m.

24. A paving system as claimed in claim 17 or any of claims 18 to 27 when appendent to claim 17 wherein the dispersing permeable layer (2) is of particulate material.

25. A paving system as claimed in claim 24 wherein the average particle size of said dispersing permeable layer (2) is smaller than that of the substrate layer (4).

26. A paving system as claimed in claim 24 or 25 wherein the particles of the dispersing permeable layer (2) have a diameter in the range of 5mm to 10mm.

27. A paving system as claimed in claim 17 or any of claims 18 to 26 when appendant to claim 17 wherein the dispersing permeable layer (2) is of a material which is non-friable and non-susceptible to frost.

28. A paving system as claimed in any of the preceding claims wherein draining means (11) is provided for enabling spillage or floodwater such as treated spillage to be drained from said containment membrane (5) and substrate layer (4).

29. A paving system as claimed in claim 28 wherein said draining means comprises valve means (11).

30. A paving system as claimed in any of the preceding claims having means for enabling gas to be drawn through at least said substrate layer (4).

31. A paving system as claimed in claim 26 wherein said gas is atmospheric air.

32. A paving system as claimed in claim 26 wherein said gas is substantially oxygen or carbon dioxide.

33. A paving system as claimed in any of the preceding claims wherein the system is arranged to enable biological decomposition of pollutants to occur in said substrate layer (4).

## Patentansprüche

1. Ein Pflaster für Verschüttungen oder zum Ableiten von Flutwasser, bestehend aus:
einer durchlässigen Schicht (1) mit einer Oberfläche;
wenigstens einer darunter ausgeführten Tragschicht (4), die Flüssigkeiten durchläßt
und einer Haltemembrane (5) aus undurchlässigem Material, die die Tragschicht (4) abstützt und das Stemmen der Flüssigkeit in der Tragschicht regelt,
wobei
die durchlässige Schicht (1) die Dränage von Verschüttungen oder Flutwasser durch die Schicht in die Tragschicht (4) ermöglicht sowie dem Einführen von Behandlungsstoffen in die Tragschicht (4) dient;
die Tragschicht (4) aus Partikelstoff besteht;
die Partikel der Tragschicht (4) unregelmäßig geformt sind, wodurch sich interstitielle Zwischenräume bilden, wo sich die abgelaufene Verschüttung, das Flutwasser oder das Behandlungsmaterial aufhalten kann und wobei die Partikel eine Größe von 15 bis 300 mm aufweisen
und wobei sich die Tragschicht (4) aus einem nicht bröckligen Stoff, der Frost gegenüber unanfällig ist, zusammensetzt.

2. Ein Pflaster nach Anspruch 1, bei dem die Tragschicht (4) teilweise oder komplett durch einen oder mehrere Teilungsvorrichtungen oder Wehre (9) in Abschnitte in der Stemmembrane (5) unterteilt wird, die die Tragschicht (4) für Verschüttungs- oder Flutwasserkontrolle beinhaltet, , um eine wirksame Behandlung der Verschüttung in der Tragschicht (4) zu ermöglichen.

3. Ein Pflaster nach einem der o.g. Ansprüche, bei dem sich die Unterteilungs-oder Wehrvorrichtung (9) vom Bast der Stemmembrane (5) bis wenigstens einem Anteil der Höhe der Tragschicht (4) erstreckt, um den Lauf von Verschüttungen, Flutwasser oder von Behandlungsmittel von einem Abschnitt der Tragschicht (4) in den/die benachbarten Abschnitt(e) zu verhindern oder einzuschränken.

4. Ein Pflaster nach Anspruch 3, bei dem sich die Trenn- oder Wehrvorrichtungen (9) über die Höhe der Tragschicht (4) erstrecken.

5. Ein Pflaster nach einem der Ansprüche 2 bis 4, bei dem die Trenn- oder Wehrvorrichtungen (9) jeweils von einem Stützteil (8) getragen werden, wobei die Stemmembrane (5) zwischen den Trenn- oder Wehrvorrichtungen (9) und dem Stützteil (8) gehalten wird.

6. Ein Pflaster nach Anspruch 5, bei dem das Stützteil (8) größtenteils U-förmig gebildet ist und eine innere Rille aufweist, die sich über die Länge des Teils erstreckt, um die Trenn- oder Wehrvorrichtung (9) gleitend aufzunehmen.

7. Ein Pflaster nach einem der Ansprüche 2 bis 6, bei dem die Stemmembrane (5) als gestreckter Kanal mit einem unteren Bereich und Seitenbereichen gebildet ist, wobei sich jeder Teil bis zur durchlässigen Schicht (1) erstreckt und sich die Trenn-oder Wehrvorrichtung (9) über die volle Breite des Kanals erstreckt.

8. Ein Pflaster nach einem der o.g. Ansprüche, bei dem die Stemmembrane (5) aus undurchlässigem Kunststoff besteht.

9. Ein Pflaster nach einem der o.g. Ansprüche, bei dem die durchlässige Schicht (1) zum Einsickern von Verschüttungen oder Flutwasser in die Tragschicht (4) sowie für das Einführen von Behandlungsstoff in die Tragschicht (4) perforiert ist.

10. Ein Pflaster nach einem der o.g. Ansprüche, bei dem die durchlässige Schicht (1) Öffnungen zum Ablassen von Verschüttungen oder Flutwasser durch die Schicht in die Tragschicht (4) sowie für das Einführen von Behandlungsstoff in die Tragschicht aufweist.

11. Ein Pflaster nach Anspruch 10, bei dem die Öffnungen durch die durchlässige Schicht (1) als Schlitze gebildet sind.

12. Ein Pflaster nach einem der o.g. Ansprüche, bei dem die durchlässige Schicht (1) aus mehreren diskreten Pflastersteinen mit seitlich aneinander liegenden Randflächen gebildet ist.

13. Ein Pflaster nach Anspruch 12, bei dem jeder diskrete Pflasterstein (1) wenigstens eine Rille in wenigstens einer der nebeneinander liegenden Randflächen aufweist, wobei diese Rille über die Dicke des Pflastersteins verläuft, um so schlitzartige Löcher zu bilden.

14. Ein Pflaster nach Ansprüchen 12 oder 13, bei dem wenigstens einige der diskreten Pflastersteine auf ihrer Oberseite gewölbt sind.

15. Ein Pflaster nach einem der Ansprüche 1 bis 11, bei dem die durchlässige Schicht durch eine einfache Plane gebildet wird, die über den gesamten Bereich oder wenigstens einen großen Anteil einer Fläche verlegt oder gegossen wird.

16. Ein Pflaster nach einem der o.g. Ansprüche, bei dem eine Filterschicht (3) zwischen der durchlässigen und den Tragschichten (1, 4) zum Filtrieren von Feststoffen aus Verschüttungen oder Flutwasser, die durch die durchlässige Schicht (1) eindringen, vorgesehen ist.

17. Ein Pflaster nach Anspruch 16, bei dem eine durchlässige Dispersionsschicht (2) zwischen der durchlässigen und der Filterschicht (1, 3) zur Dispersion von Verschüttungen oder Flutwasser, die/das durch die durchlässige Schicht (1) über der Filterschicht (3) eindringt(en), vorgesehen wird.

18. Ein Pflaster nach einem der o.g. Ansprüche, bei dem die Partikelgröße der Substratschicht (4) im Bereich von 15 bis 300 mm liegt, wobei sich die Partikelgröße größtenteils am unteren Ende dieses Bereichs bewegt.

19. Ein Pflaster nach Anspruch 18, bei dem die Partikelgröße der Substratschicht (4) im Bereich von 15 bis 200 mm liegt, wobei sich die Partikelgröße größtenteils am unteren Ende dieses Bereichs bewegt.

20. Ein Pflaster nach einem der o.g. Ansprüche, bei dem die Partikel überlappen.

21. Ein Pflaster nach einem der Ansprüche 18 bis 20, bei dem die Partikel porös oder hohl sind.

22. Ein Pflaster nach Anspruch 16 oder einem der Ansprüche 17 bis 21, wenn sich diese auf Anspruch 4 stützen, bei dem die Filterschicht (3) aus Geotextilstoff besteht.

23. Ein Pflaster nach Ansprüchen 16 oder 22, bei dem die Stärke der Filterschicht3 (3) im Bereich von 1 mm bis 1,5 m liegt.

24. Ein Pflaster nach Anspruch 17 oder Ansprüchen 18 bis 27, wenn sich diese auf Anspruch 17 stützen, bei dem die durchlässige Dispersionsschicht (2) aus Partikelstoff besteht.

25. Ein Pflaster nach Anspruch 24, bei dem die durchschnittliche Partikelgröße der durchlässigen Dispersionsschicht (2) kleiner ist, als die der Tragschicht (4).

26. Ein Pflaster nach Ansprüchen 24 oder 25, bei dem die Partikel der durchlässigen Dispersionsschicht (2) einen Durchmesser im Bereich von 5 bis 10 mm aufweisen.

27. Ein Pflaster nach Anspruch 17 oder Ansprüchen 18 bis 26, wenn sich diese auf Anspruch 17 stützen, bei dem die durchlässige Dispersionsschicht (2) aus einem Material besteht, das weder bröcklig wird noch Frost gegenüber anfällig ist.

28. Ein Pflaster nach einem der o.g. Ansprüche, bei dem die Dränagevorrichtung (11) dem Ablassen von Verschüttungen, Flutwasser, wie z.B. behandelten Verschüttungen, aus der Stemmembrane (5) und der Tragschicht (4) dient.

29. Ein Pflaster nach Anspruch 28, bei dem die Dränagevorrichtung aus einer Ventilvorrichtung (11) besteht.

30. Ein Pflaster nach einem der o.g. Ansprüche mit einer Vorrichtung zum Abzug von Gas wenigstens aus der Tragschicht (4).

31. Ein Pflaster nach Anspruch 26, bei dem das erwähnte Gas atmosphärische Luft darstellt.

32. Ein Pflaster nach Anspruch 26, bei dem das Gas größtenteils Sauerstoff oder Kohlendioxid darstellt.

33. Ein Pflaster nach einem der o.g. Ansprüche, bei dem das Pflaster so eingerichtet ist, daß sich Verunreinigungsstoffe in der Tragschicht (4) biologisch zersetzen können.

## Revendications

1. Un système de pavage pour la gestion des déversements ou des eaux de crue, qui comporte :
une couche perméable (1) qui constitue une surface supérieure;
au moins une couche de substrat de support (4) perméable aux liquides, au-dessous de la couche (1);
et une membrane de confinement (5) en une matière imperméable, qui contient ladite couche de substrat (4) pour assurer un confinement contrôlé du liquide confiné à l'intérieur;
système dans lequel :
ladite couche perméable (1) rend possible l'écoulement des déversements ou des eaux de crue à travers cette couche et jusque sur la couche de substrat (4), ainsi que l'introduction d'une matière de traitement dans ladite couche de substrat (4);
la couche de substrat (4) est en une matière particulaire;
les particules de la couche de substrat (4) sont de forme irrégulière afin de former des cavités interstitielles dans lesquelles peuvent séjourner les écoulements de déversements ou d'eaux de crue, ou encore la matière de traitement introduite, et dont la granulométrie est comprise entre 15 mm et 300 mm;
et dans lequel la couche de substrat (4) est en une matière non friable et non sensible au gel.

2. Un système de pavage tel que revendiqué dans la revendication 1, dans lequel la couche de substrat (4) est divisée partiellement ou totalement par un ou plusieurs diviseurs ou déversoirs (9) en sections à l'intérieur de la membrane de confinement (5) qui renferme la couche de substrat (4), soit pour contrôler les déversements ou les eaux de crue, soit pour rendre possible un traitement efficace des déversements à l'intérieur de ladite couche de substrat (4).

3. Un système de pavage tel que revendiqué dans l'une quelconque des revendications précédentes, dans lequel le diviseur ou déversoir (9), ou chacun de ceux-ci, se prolonge à partir de la base de la membrane de confinement (5) à travers au moins une partie de la hauteur de ladite couche de substrat (4) pour prévenir ou limiter le passage des déversements ou des eaux de crue drainées, ou encore de la matière de traitement, à partir de l'une des sections de la couche de substrat (4) jusqu'à une section ou des sections adjacente(s).

4. Un système de pavage tel que revendiqué dans la revendication 3, dans lequel le diviseur ou déversoir (9) ou chacun de ceux-ci, se prolonge sur toute la hauteur de ladite couche de substrat (4).

5. Un système de pavage tel que revendiqué dans l'une quelconque des revendications 2 à 4, dans lequel le diviseur ou déversoir (9), ou chacun de ceux-ci, est supporté par un élément de support (8) respectif, ladite membrane de confinement (5) étant retenue entre le diviseur ou déversoir (9) et l'élément de support (8).

6. Un système de pavage tel que revendiqué dans la revendication 5, dans lequel l'élément de support 8 est substantiellement en forme de U, avec une rainure intérieure sur toute sa longueur, rainure dans laquelle peut coulisser ledit diviseur ou déversoir (9).

7. Un système de pavage tel que revendiqué dans l'une quelconque des revendications 2 à 6 précédentes, dans lequel la membrane de confinement (5) forme un profilé en U allongé qui possède une partie de fond et deux parties latérales, chaque partie latérale remontant jusqu'à la couche perméable (1); le diviseur ou déversoir (9) ou chacun de ceux-ci se prolonge sur toute la largeur du profilé en U.

8. Un système de pavage tel que revendiqué dans l'une quelconque des revendications précédentes, dans lequel la membrane de confinement (5) est en une matière plastique imperméable.

9. Un système de pavage tel que revendiqué dans l'une quelconque des revendications précédentes, dans lequel ladite couche perméable (1) est perforée pour permettre l'écoulement des déversements ou des eaux de crue à travers cette couche jusque dans la couche de substrat (4), ainsi que l'introduction d'une matière de traitement dans la couche de substrat (4).

10. Un système de pavage tel que revendiqué dans l'une quelconque des revendications précédentes, dans lequel ladite couche perméable (1) est dotée d'ouvertures pour l'écoulement des déversements ou des eaux de crue à travers cette couche jusque dans la couche de substrat (4) et pour l'introduction d'une matière de traitement dans la couche de substrat.

11. Un système de pavage tel que revendiqué dans la revendication 10, dans lequel les ouvertures pratiquées à travers la couche perméable sont en forme de fentes.

12. Un système de pavage tel que revendiqué dans l'une quelconque des revendications précédentes, dans lequel la couche perméable (1) est formée d'une pluralité de pavages discrets dont les surfaces des bords latéraux sont en aboutement.

13. Un système de pavage tel que revendiqué dans la revendication 12, dans lequel; chaque pavage discret (1) est doté d'au moins une rainure dans au moins une des dites surfaces des bords latéraux, chacune des dites rainures se prooongeant sur toute l'épaisseur du dit pavage pour constituer les dits trous en forme de fente.

14. Un système de pavage tel que revendiqué dans la revendication 12 ou 13, dans lequel certains au moins des pavages discrets sont dotés de reliefs sur l'une de leurs surfaces supérieures.

15. Un système de pavage tel que revendiqué dans l'une quelconque des revendications 1 à 11, dans lequel ladite couche perméable (1) est formée d'un d'une seule feuille posée ou coulée sur la totalité, ou au moins sur une grande partie, d'une surface.

16. Un système de pavage tel que revendiqué dans l'une quelconque des revendications précédentes, dans lequel une couche filtrante (3) est mise en place entrre la couche perméable et le substrat (1,4) pour filtrer les solides hors des déversements ou des eaux de crue qui s'écoulent à travers la couche perméable (1).

17. Un système de pavage tel que revendiqué dans la revendication 16, dans lequel une couche perméable dispersante (2) est mise en place entre la couche perméable et la couche filtrante (1,3) pour disperser, au-dessus de la couche filtrante, les déversements ou les eaux de crue qui s'écoulent à travers la couche perméable (1).

18. Un système de pavage tel que revendiqué dans l'une quelconque des revendications précédentes, dans lequel la granulométrie de la couche de substrat (4) est comprise dans la plage de 15 mm à 300 mm, la majorité des particules ayant une granulométrie plus proche de l'extrémité inférieure de la plage.

19. Un système de pavage tel que revendiqué dans la revendication 18, dans lequel la granulométrie de la couche de substrat (4) est comprise dans la plage de 15 mm à 200 mm, la majorité des particules ayant une granulométrie plus proche de l'extrémité inférieure de la plage.

20. Un système de pavage tel que revendiqué dans l'une quelconque des revendications précédentes, dans lequel lesdites particules sont de forme lobaire.

21. Un système de pavage tel que revendiqué dans l'une quelconque des revendications 18 à 20, dans lequel lesdites particules sont poreuses ou creuses.

22. Un système de pavage tel que revendiqué dans la revendication 16 ou dans l'une quelconque des revendications 17 à 21 lorsque rattachées à la revendication 4, dans lequel la couche filtrante est en une matière géotextile.

23. Un système de pavage tel que revendiqué dans la revendication 16 ou 22, dans lequel l'épaisseur de la couche filtrante (3) est comprise entre 1 mm et 1,5 mm.

24. Un système de pavage tel que revendiqué dans la revendication 17 ou dans les revendications 18 à 27 lorsque rattachées à la revendication 17, dans lequel la couche perméable dispersante (2) est en une matière particulaire.

25. Un système de pavage tel que revendiqué dans la revendication 24, dans lequel la granulométrie moyenne de ladite couche perméable dispersante (2) est inférieure à celle de la couche de substrat (4).

26. Un système de pavage tel que revendiqué dans la revendication 24 ou 25, dans lequel les particules de la couche perméable dispersante ont un diamètre compris dans la plage de 5 mm à 10 mm.

27. Un système de pavage tel que revendiqué dans la revendication 17 ou dans l'une quelconque des revendications 18 à 26 lorsque rattachées à la revendication 17, dans lequel la couche perméable dispersante (2) est en une matière qui est non friable et non sensible au gel.

28. Un système de pavage tel que renvendiqué dans l'une quelconque des revendications précédentes, dans lequel un moyen de drainage (11) est mis en place pour rendre possible l'écoulement de déversements ou d'eaux de crue, de déversements traités, par exemple, à partir de ladite membrane de confinement (5) et de ladite couche de substrat (4).

29. Un système de pavage tel que revendiqué dans la revendication 28, dans lequel ledit moyen de drainage comprend une soupape (11).

30. Un système de pavage tel que revendiqué dans l'une quelconque des revendications précédentes, doté d'un moyen qui permet d'attirer un gaz à travers, au moins, ladite couche de substrat (4).

31. Un système de pavage tel que revendiqué dans la revendication 26, dans lequel ledit gaz est l'air atmosphérique.

32. Un système de pavage tel que revendiqué dans la revendication 26, dans lequel ledit gaz est principalement de l'oxygène ou du gaz carbonique.

33. Un système de pavage tel que revendiqué dans l'une quelconque des revendications précédentes, dans lequel le système est configuré de manière à rendre possible la décomposition biologique des polluants dans ladite couche de substrat (4).
